(19) Europäisches Patentamt / European Patent Office / Office européen des brevets

(11) **EP 3 196 257 B1**

(12) **EUROPEAN PATENT SPECIFICATION**

(45) Date of publication and mention
of the grant of the patent:
**21.09.2022 Bulletin 2022/38**

(21) Application number: **15827280.7**

(22) Date of filing: **28.07.2015**

(51) International Patent Classification (IPC):
**C08L 101/12** *(2006.01)*    **C08K 3/08** *(2006.01)*
**H01B 1/22** *(2006.01)*    **H01B 5/14** *(2006.01)*
**H02N 11/00** *(2006.01)*

(52) Cooperative Patent Classification (CPC):
(C-Sets available)
**H01B 5/14; C08K 3/08; C08L 101/12; H01B 1/22;
H02N 11/00;** C08K 2003/0806; C08K 2003/085

(Cont.)

(86) International application number:
**PCT/JP2015/071387**

(87) International publication number:
**WO 2016/017644 (04.02.2016 Gazette 2016/05)**

(54) **CONDUCTIVE COMPOSITION AND CONDUCTIVE SHEET CONTAINING THE SAME**

LEITFÄHIGE ZUSAMMENSETZUNG UND DIESE ENTHALTENDE LEITFÄHIGE FOLIE

COMPOSITION CONDUCTRICE ET FEUILLE CONDUCTRICE COMPRENANT CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2014 JP 2014156689**

(43) Date of publication of application:
**26.07.2017 Bulletin 2017/30**

(73) Proprietor: **Tatsuta Electric Wire & Cable Co., Ltd.
Higashiosaka-shi, Osaka 578-8585 (JP)**

(72) Inventors:
• **TAKAHASHI, Akio
Kizugawa-city
Kyoto 619-0216 (JP)**
• **TERADA, Tsunehiko
Kizugawa-city
Kyoto 619-0216 (JP)**

(74) Representative: **Müller-Boré & Partner
Patentanwälte PartG mbB
Friedenheimer Brücke 21
80639 München (DE)**

(56) References cited:
EP-A1- 2 457 944        WO-A1-2008/111194
WO-A1-2015/005220        JP-A- H0 992 032
JP-A- S63 117 086        JP-A- 2004 176 005
JP-A- 2009 138 141        JP-A- 2012 211 256
KR-A- 20060 055 134

• **DATABASE WPI Week 201282 Thomson
Scientific, London, GB; AN 2012-Q90538
XP002776797, -& WO 2012/164925 A1 (TOYO INK
MFG CO LTD) 6 December 2012 (2012-12-06)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/08, C08L 21/00;**
**C08K 3/08, C08L 75/04**

**Description**

TECHNICAL FIELD

The present invention relates to a conductive sheet comprising a peeling film and a conductive film formed on the surface of the peeling film, the conductive film being made of an extendable conductive composition appropriate for a material for an electrode, a wiring, and the like.

BACKGROUND ART

PATENT LITERATURE 1 discloses an extendable conductive film appropriate for an electrode, a wiring, and the like. The conductive film contains an elastomer and a first metal filler and a second metal filler filled in this elastomer. The first metal filler is a needle-shaped or flaky metal filler. The second metal filler is a lump metal filler. The first metal filler is orientated in a film extending direction.

PATENT LITERATURE 2 discloses an extendable wiring formed by drying mixed aqueous polyurethane dispersion and conductive particles. PATENT LITERATURE 3 describes a polymer mixture. PATENT LITERATURE 4 discloses an electrically conductive sheet and a process for producing same, and an electronic component.

CITATION LIST

PATENT LITERATURE

    PATENT LITERATURE 1: JP-A-2010-153364
    PATENT LITERATURE 2: JP-A-2012-54192
    PATENT LITERATURE 3: EP 2 457 944 A1
    PATENT LITERATURE 4: WO 2012/164925 A1

SUMMARY OF THE INVENTION

PROBLEMS TO BE SOLVED BY THE INVENTION

Conventionally, it is considered that, as a conductive filler for an extendable conductive film, the use of a flaky (scaly) conductive filler is appropriate. The reason for this is considered as follows. Since the use of the flat flaky conductive filler as the conductive filler can increase a contact area where the conductive fillers are in contact with one another, the contact between the conductive fillers can be maintained even during extension of the conductive film.

However, the conventional extendable conductive films have been examined mainly focusing on improvement in conductivity before and after extension and contraction. Durability (maintenance of the conductivity) during repeated extension and contraction was insufficient.

To solve the problem, through various experiments free from the conventional way of thinking, the inventors of the present application consequently have invented this invention.

An object of the present invention is to provide a conductive sheet that contains a novel conductive composition with extendibility that can restrain an increase in resistance value in repeated extension and contraction.

SOLUTION TO THE PROBLEMS

A conductive composition comprised in the conductive sheet according to the invention includes: a polyurethane-based elastomer; and a dendrite-shaped conductive filler filled in the polyurethane-based elastomer, wherein a filling factor of the conductive filler in the polyurethane-based elastomer is 70 weight% or more and 95 weight% or less and the polyurethane-based elastomer is formed of a hard segment and a soft segment, wherein the soft segment includes a carbonate, ester, or ether.

The "dendrite-shaped" means a shape where rod-shaped bifurcated branches extend from a rod-shaped main branch in a two-dimensional direction or a three-dimensional direction. The "dendrite-shaped" also includes a shape where the bifurcated branch bends in the middle and a shape where a rod-shaped bifurcated branch further extends from the middle of the bifurcated branch.

With the present invention, the conductive filler has the dendrite shape. Therefore, even if the elastomer extends, the present invention can improve a probability of a contact between the conductive fillers. This ensures good formation of a conductive path in the elastomer even if the elastomer extends. Consequently, this ensures providing a conductive composition with extendibility that can restrain an increase in resistance value during the extension.

According to the present invention, a filling factor of the conductive filler in the elastomer is 70 weight% or more and 95 weight% or less in the conductive composition.

According to the configuration above, the increase in resistance value during the extension of the elastomer may be effectively restrained. This ensures forming a conductive composition with good resistance to a fatigue and deterioration. The filling factor of the conductive filler in the elastomer is preferably 75 weight% or more and 90 weight% or less in the conductive composition.

With one embodiment of the present invention, the conductive filler is a dendrite-shaped silver powder. This composition ensures achieving the conductive filler with good biocompatibility and lower resistance.

With one embodiment of the present invention, the conductive filler is a silver-coated copper powder including a dendrite-shaped copper powder coated with silver.

According to the configuration above, this composition allows achieving a resistivity close to the conductive filler made of silver at a comparatively low price. Moreover, the conductive filler excellent in conductivity and migration resistance may also be obtained. In this case, since the elastomer is a polyurethane-based elastomer, the polyurethane-based elastomer has high affinity for the conductive filler containing silver. This ensures good extendibility of the conductive composition.

With one embodiment of the present invention, the conductive filler is the dendrite-shaped copper powder. According to the configuration above, it ensures achieving the conductive filler with low resistance at a low price.

With one embodiment of the present invention, a maximum value of a resistance value between both ends of a sample is 30 $\Omega$ or less in the case where 20% tensile strain was repeatedly applied 100 times at a frequency of 1.0 Hz on the sample made of the conductive composition with a length of 15 cm, a width of 1 cm, and a thickness of 80 $\mu$m.

The 20% tensile strain means the tensile strain of which the extension percentage of the sample is 20%. The extension percentage is defined as follows: ((the length of the sample after the extension - the length of the sample before the extension) / the length of the sample before the extension) $\times$ 100.

According to the configuration above, it can provide the conductive composition appropriate for an application where the tensile strain is repeatedly applied.

With one embodiment of the present invention, a maximum value of a resistance value between both ends of a sample is 30 $\Omega$ or less in the case where 20% tensile strain was repeatedly applied 100 times at a frequency of 1.0 Hz on the sample made of the conductive composition with a length of 15 cm, a width of 1 cm, and a thickness of 60 $\mu$m.

With one embodiment of the present invention, the conductive filler is the dendrite-shaped silver powder. A maximum value of a resistance value between both ends of a sample is 15 $\Omega$ or less in the case where 20% tensile strain was repeatedly applied 100 times at a frequency of 1.0 Hz on the sample made of the conductive composition with a length of 15 cm, a width of 1 cm, and a thickness of 60 $\mu$m.

With one embodiment of the present invention, a maximum value of a resistance value between both ends of a sample is 50 $\Omega$ or less in the case where 20% tensile strain was repeatedly applied 100 times at a frequency of 1.0 Hz on the sample made of the conductive composition with a length of 15 cm, a width of 1 cm, and a thickness of 40 $\mu$m.

With one embodiment of the present invention, the conductive filler is the dendrite-shaped silver powder. A maximum value of a resistance value between both ends of a sample is 25 $\Omega$ or less in the case where 20% tensile strain was repeatedly applied 100 times at a frequency of 1.0 Hz on the sample made of the conductive composition with a length of 15 cm, a width of 1 cm, and a thickness of 40 $\mu$m.

With one embodiment of the present invention, a maximum value of a resistance value between both ends of a sample is 50 $\Omega$ or less in the case where 40% tensile strain was repeatedly applied 100 times at a frequency of 1.0 Hz on the sample made of the conductive composition with a length of 7.5 cm, a width of 1 cm, and a thickness of 80 $\mu$m.

According to the configuration above, it can provide the conductive composition appropriate for the application where the tensile strain is repeatedly applied.

With the one embodiment of the present invention, a resistance value between both ends of a sample is 300 $\Omega$ or less when the sample made of the conductive composition with a length of 5 cm, a width of 1 cm, and a thickness of 80 $\mu$m is extended up to an extension percentage of 200%.

According to the configuration above, it can provide the conductive composition appropriate for an application where a large tensile strain is applied.

A first conductive sheet according to the present invention includes: a peeling film; and a conductive film formed on one surface of the peeling film, the conductive film being made of the conductive composition.

According to the configuration above, it can provide the conductive sheet that includes the conductive film with extendibility that ensures restraining the increase in resistance during the extension.

A second conductive sheet according to the present invention includes: a peeling film; a conductive film formed on one surface of the peeling film, the conductive film being made of the conductive composition; and an insulating protective film formed on a surface of the conductive film, the surface being on the opposite side of the peeling film.

According to the configuration above, it can provide the conductive sheet including the conductive film with extendibility that ensures restraining the increase in resistance during the extension and further includes the insulating protective film on one surface. This ensures providing the conductive sheet that can be used as a shield film with extendibility.

BRIEF DESCRIPTION OF THE DRAWINGS

Fig. 1 is a perspective view schematically describing a shape of a sample.

Fig. 2A is a graph mainly illustrating a change in resistance values of respective samples a1, b1, and c1 when 20% tensile strain was repeatedly applied 100 times to the samples a1, b1, and c1 at a frequency of 1.0 Hz.

Fig. 2B is a graph illustrating an enlarged part of broken lines A1, B1, and C1 in Fig. 2A in a range of the resistance value of 0 Ω to 50 Ω.

Fig. 2C is a graph mainly illustrating a change in resistance values of respective samples d1, e1, f1, and g1 when 20% tensile strain was repeatedly applied 100 times to the samples d1, e1, f1, and g1 at a frequency of 1.0 Hz.

Fig. 3 is a graph mainly illustrating a change in resistance values of respective samples a2, b2, and c2 when 40% tensile strain was repeatedly applied 100 times to the samples a2, b2, and c2 at a frequency of 1.0 Hz.

Fig. 4 is a graph illustrating resistance values with respect to extension percentages of respective samples a3, b3, and c3 in the case where the samples a3, b3, and c3 are extended at a plurality of different extension percentages.

Fig. 5 is a schematic cross-sectional view illustrating a configuration of a conductive sheet according to a first embodiment of the present invention.

Fig. 6 is an explanatory view to describe an example of a manufacturing process for the conductive sheet in Fig. 5.

Fig. 7 is a schematic cross-sectional view to describe a method of using the conductive sheet in Fig. 5.

Fig. 8 is a schematic cross-sectional view to describe an example of use of the conductive sheet in Fig. 5.

Fig. 9 is a schematic cross-sectional view illustrating a configuration of a conductive sheet according to a second embodiment of the present invention.

Fig. 10 is a schematic cross-sectional view to describe a method of using the conductive sheet in Fig. 9.

Fig. 11 is a schematic cross-sectional view to describe an example of use of the conductive sheet in Fig. 9.

DESCRIPTION OF THE EMBODIMENTS

A conductive composition of the present invention contains a polyurethane-based elastomer and a dendrite-shaped conductive filler filled in the elastomer, wherein a filling factor of the conductive filler in the polyurethane-based elastomer is 70 weight% or more and 95 weight% or less. With the conductive composition of the present invention, the conductive filler has the dendrite shape. Therefore, even if the elastomer extends, the present invention can improve a probability of a contact between the conductive fillers. This ensures good formation of a conductive path in the elastomer even if the elastomer extends. Consequently, this ensures providing a conductive composition with extendibility that can restrain an increase in resistance value during the extension.

The soft segment includes a carbonate, ester, or ether. Specifically, NE-8880, MAU-9022, NE-310, NE-302HV, CU-8448, and the like manufactured by DAINICHISEIKA COLOR & CHEMICALS MFG. CO., LTD. can be used. As the polyurethane-based elastomer, PANDEX 372E manufactured by DIC CORPORATION can be used. The elastomer may be made of a single resin or may contain a plurality of kinds of resins. In terms of improvement in manufacturability (workability), flexibility, and the like, the elastomer may contain an additive such as plasticizer, processing aid, crosslinking agent, vulcanization accelerator, vulcanization aid, antioxidant, softener, or colorant and the like.

The "dendrite-shaped" means a shape where rod-shaped bifurcated branches extend from a rod-shaped main branch in a two-dimensional direction or a three-dimensional direction. The "dendrite-shaped" also includes a shape where the bifurcated branch bends in the middle and a shape where a rod-shaped bifurcated branch further extends from the middle of the bifurcated branch.

The conductive filler may be, for example, a silver-coated copper powder including a dendrite-shaped copper powder coated with silver. The conductive filler may be, for example, a dendrite-shaped copper powder or a silver powder. The conductive filler made of the dendrite-shaped, silver-coated copper powder can achieve the conductive filler that has a resistance value close to that of the conductive filler made of silver and excellent conductivity and migration resistance at a comparatively low price. The conductive filler made of dendrite-shaped copper powder can achieve the conductive filler that has a low resistance value at a low price. The conductive filler may use a gold-coated copper powder which is a dendrite shaped copper powder coated with a conductive material other than silver such as gold.

When the conductive filler is made of the dendrite-shaped, silver-coated copper powder, the polyurethane-based elastomer is employed as the elastomer. In this case, the polyurethane-based elastomer has high affinity for the conductive filler containing silver. Therefore, this ensures good extension of the conductive composition.

A grain diameter of the conductive filler is 1 $\mu$m at a lower limit and preferably 2 $\mu$m. The lower limit of 1 $\mu$m or more is easy to cause a contact between the conductive fillers, bringing the good conductivity of the conductive composition. The grain diameter of the conductive filler is 20 $\mu$m at an upper limit and preferably 10 $\mu$m. The upper limit of 20 $\mu$m or less ensures reduction of thickness of a conductive film made of the conductive composition; therefore, an electronic component using the conductive film can achieve the reduction of thickness.

In addition to the above-described dendrite-shaped conductive filler, as the conductive filler, a lump, spheral, flaky, needle-shaped, fiber-like, or coiled conductive filler or the like may be used as long as the effects of the present invention are not affected.

Working Examples

The following specifically describes the present invention by embodiments. Table 1 shows examples 1, 2, and 4 to 7 of the present invention and comparative example 3.

[Table 1]

| | Conductive filler | | Elastomer | Length L (cm) | Width W (cm) | Thickness T (cm) |
|---|---|---|---|---|---|---|
| | Type | Charging percentage (weight%) | | | | |
| Sample a1 | Silver-coated copper | 60 | PANDEX 372E | 15.0 | 1.0 | 0.008 |
| Sample a2 | Silver-coated copper | 60 | PANDEX 372E | 7.5 | 1.0 | 0.008 |
| Sample a3 | Silver-coated copper | 60 | PANDEX 372E | 5.0 | 1.0 | 0.008 |
| Sample b1 | Silver-coated copper | 80 | PANDEX 372E | 15.0 | 1.0 | 0.008 |
| Sample b2 | Silver-coated copper | 80 | PANDEX 372E | 7.5 | 1.0 | 0.008 |
| Sample b3 | Silver-coated cooper | 80 | PANDEX 372E | 5.0 | 1.0 | 0.008 |
| Sample c1 | Silver-coated copper | 90 | PANDEX 372E | 15.0 | 1.0 | 0.008 |
| Sample c2 | Silver-coated copper | 90 | PANDEX 372E | 7.5 | 1.0 | 0.008 |
| Sample c3 | Silver-coated copper | 90 | PANDEX 372E | 5.0 | 1.0 | 0.008 |
| Sample d1 | Silver-coated copper | 80 | NE-310 | 15.0 | 1.0 | 0.006 |
| Sample e1 | Silver-coated copper | 80 | NE-310 | 15.0 | 1.0 | 0.004 |
| Sample fl | Silver | 80 | NE-310 | 15.0 | 1.0 | 0.006 |
| Sample g1 | Silver | 80 | NE-310 | 15.0 | 1.0 | 0.004 |

[Example 1]

A dendrite-shaped, silver-coated copper powder with grain diameter of 5 $\mu$m (manufactured by MITSUI MINING & SMELTING CO., LTD.) was compounded with a polyurethane-based elastomer (PANDEX 372E manufactured by DIC CORPORATION) such that a filling factor of the silver-coated copper powder (the filling factor of the conductive filler in the conductive composition) became 80 mass%. Next, a mixed solvent (a weight ratio of an isopropyl alcohol to a toluene: 5 : 5) of the isopropyl alcohol and the toluene was added by 40 pts.mass with respect to 100 pts.mass of the polyurethane-based elastomer and was stirred by planetary stirrer. Thus, a solution containing the polyurethane-based elastomer, the silver-coated copper powder, and the organic solvent (hereinafter referred to as a "conductive solution") was obtained.

Next, a conductive solution is applied over one surface of a peeling film and then heat dried such that a film thickness after the drying became 80 μm by using an applicator. This heat drying process performed heat drying by hot wind at 60°C, 100°C, and 120°C. The heat drying process performed for two minutes at each temperature stage listed above. This formed a thin-film shaped conductive composition (hereinafter referred to as a "conductive film") on one surface of the peeling film.

Next, the conductive film was cut into predetermined sizes. Afterwards, by peeling off the peeling film from the conductive film, samples b1, b2, and b3 were obtained.

[Example 2]

A conductive film was formed on one surface of a peeling film by a method identical to Example 1 except for the following points. A dendrite-shaped, silver-coated copper powder was compounded with a polyurethane-based elastomer such that a filling factor of the silver-coated copper powder became 90 mass%. Additionally, the mixed solvent was designed to be 164 pts.mass with respect to 100 pts.mass of the polyurethane-based elastomer. By cutting the conductive film into the predetermined sizes, samples c1, c2, and c3 were obtained.

[Comparative Example 3]

A conductive film was formed on one surface of a peeling film by a method identical to Example 1 except for the following points. A dendrite-shaped, silver-coated copper powder was compounded with a polyurethane-based elastomer such that a filling factor of the silver-coated copper powder became 60 mass%. Additionally, a mixed solvent was not used. By cutting the conductive film into the predetermined sizes, samples a1, a2, and a3 were obtained.

[Example 4]

A dendrite-shaped, silver-coated copper powder with grain diameter of 5 μm (manufactured by MITSUI MINING & SMELTING CO., LTD.) was compounded with a polyurethane-based elastomer (NE-310 manufactured by DAINICHISEIKA COLOR & CHEMICALS MFG. CO., LTD.) such that a filling factor of the silver-coated copper powder (the filling factor of the conductive filler in the conductive composition) became 80 mass%. Next, a mixed solvent (a weight ratio of an isopropyl alcohol to a toluene: 5 : 5) of the isopropyl alcohol and the toluene was added by 40 pts.mass with respect to 100 pts.mass of the polyurethane-based elastomer and was stirred by planetary stirrer. Thus, a solution containing the polyurethane-based elastomer, the silver-coated copper powder, and the organic solvent (hereinafter referred to as a "conductive solution") was obtained.

Next, a conductive solution applied over one surface of a peeling film and then heat dried such that a film thickness after the drying became 60 μm by using an applicator. This heat drying process performed heat drying by hot wind at 60°C, 100°C, and 120°C. The heat drying process performed for two minutes at each temperature stage listed above. This formed a thin-film shaped conductive composition (hereinafter referred to as a "conductive film") on one surface of the peeling film.

Next, the conductive film was cut into a predetermined size. Afterwards, by peeling off the peeling film from the conductive film, a sample d1 was obtained.

[Example 5]

A dendrite-shaped, silver-coated copper powder with grain diameter of 5 μm (manufactured by MITSUI MINING & SMELTING CO., LTD.) was compounded with a polyurethane-based elastomer (NE-310 manufactured by DAINICHISEIKA COLOR & CHEMICALS MFG. CO., LTD.) such that a filling factor of the silver-coated copper powder (the filling factor of the conductive filler in the conductive composition) became 80 mass%. Next, a mixed solvent (a weight ratio of an isopropyl alcohol to a toluene: 5 : 5) of the isopropyl alcohol and the toluene was added by 40 pts.mass with respect to 100 pts.mass of the polyurethane-based elastomer and was stirred by planetary stirrer. Thus, a solution containing the polyurethane-based elastomer, the silver-coated copper powder, and the organic solvent (hereinafter referred to as a "conductive solution") was obtained.

Next, a conductive solution applied over one surface of a peeling film and then heat dried such that a film thickness after the drying became 40 $\mu$m by using an applicator. This heat drying process performed heat drying by hot wind at 60°C, 100°C, and 120°C. The heat drying process performed for two minutes at each temperature stage listed above. This formed a thin-film shaped conductive composition (hereinafter referred to as a "conductive film") on one surface of the peeling film.

Next, the conductive film was cut into a predetermined size. Afterwards, by peeling off the peeling film from the conductive film, a sample e1 was obtained.

[Example 6]

A dendrite-shaped, silver powder with grain diameter of 5 $\mu$m (manufactured by MITSUI MINING & SMELTING CO., LTD.) was compounded with a polyurethane-based elastomer (NE-310 manufactured by DAINICHISEIKA COLOR & CHEMICALS MFG. CO., LTD.) such that a filling factor of the silver powder (the filling factor of the conductive filler in the conductive composition) became 80 mass%. Next, a mixed solvent (a weight ratio of an isopropyl alcohol to a toluene: 5 : 5) of the isopropyl alcohol and the toluene was added by 40 pts.mass with respect to 100 pts.mass of the polyurethane-based elastomer and was stirred by planetary stirrer. Thus, a solution containing the polyurethane-based elastomer, the silver copper powder, and the organic solvent (hereinafter referred to as a "conductive solution") was obtained.

Next, a conductive solution applied over one surface of a peeling film and then heat dried such that a film thickness after the drying became 60 $\mu$m by using an applicator. This heat drying process performed heat drying by hot wind at 60°C, 100°C, and 120°C. The heat drying process performed for two minutes at each temperature stage listed above. This formed a thin-film shaped conductive composition (hereinafter referred to as a "conductive film") on one surface of the peeling film.

Next, the conductive film was cut into a predetermined size. Afterwards, by peeling off the peeling film from the conductive film, a sample fl was obtained.

[Example 7]

A dendrite-shaped, silver powder with grain diameter of 5 $\mu$m (manufactured by MITSUI MINING & SMELTING CO., LTD.) was compounded with a polyurethane-based elastomer (NE-310 manufactured by DAINICHISEIKA COLOR & CHEMICALS MFG. CO., LTD.) such that a filling factor of the silver powder (the filling factor of the conductive filler in the conductive composition) became 80 mass%. Next, a mixed solvent (a weight ratio of an isopropyl alcohol to a toluene: 5 : 5) of the isopropyl alcohol and the toluene was added by 40 pts.mass with respect to 100 pts.mass of the polyurethane-based elastomer and was stirred by planetary stirrer. Thus, a solution containing the polyurethane-based elastomer, the silver powder, and the organic solvent (hereinafter referred to as a "conductive solution") was obtained.

Next, a conductive solution applied over one surface of a peeling film and then heat dried such that a film thickness after the drying became 40 $\mu$m by using an applicator. This heat drying process performed heat drying by hot wind at 60°C, 100°C, and 120°C. The heat drying process performed for two minutes at each temperature stage listed above. This formed a thin-film shaped conductive composition (hereinafter referred to as a "conductive film") on one surface of the peeling film.

Next, the conductive film was cut into a predetermined size. Afterwards, by peeling off the peeling film from the conductive film, a sample g1 was obtained.

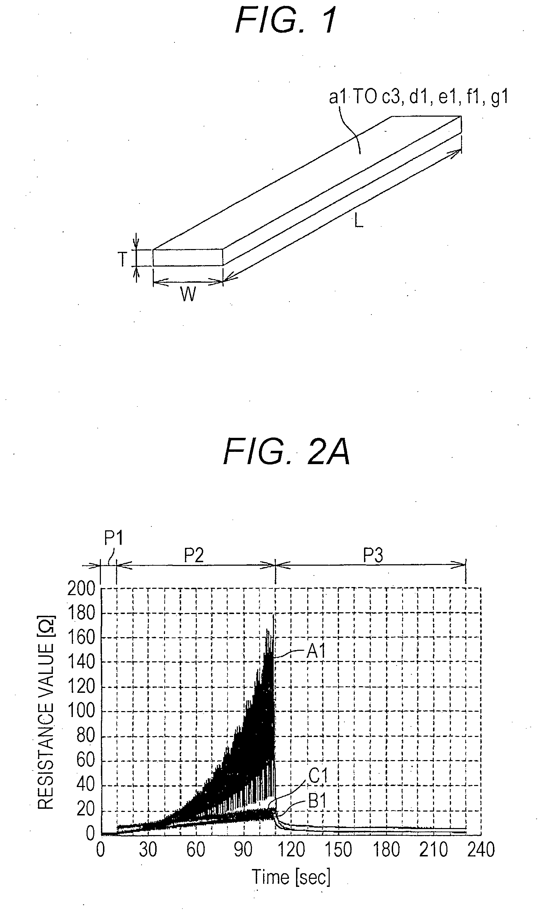

Table 1 shows the filling factors of the conductive fillers in the respective samples obtained above and lengths L, widths W, and thicknesses T of the respective samples. Fig. 1 illustrates a schematic diagram of the shape of the respective samples. As illustrated in Fig. 1, the respective samples have a strip shape having a rectangular shape in plan view. In Fig. 1, L indicates the length of the sample, W indicates the width of the sample, and T indicates the thickness of the sample.

[First Evaluation Experiment]

The first evaluation experiment was conducted on the samples a1, b1, c1, d1, e1, f1, and g1. In the first evaluation experiment, the samples were installed to a self-produced fatigue testing machine. The self-produced fatigue testing machine includes a pair of acrylic boards with 30 cm square that reciprocatably operate in opposed directions. Both ends of the samples were fixedly secured to surfaces of the acrylic boards. Furthermore, both ends were sandwiched by alligator clips to be coupled to an electrical resistance measuring device. Next, the samples are maintained for 10 seconds in a natural state. This period may be referred to as first period P1. After this, 20% tensile strain is repeatedly applied 100 times at a frequency of 1.0 Hz on the samples. This period may be referred to as second period P2. The duration of second period P2 is 100 seconds. Finally, the sample is returned to the natural state and maintained for 120 seconds. This period may be referred to as third period P3. Resistances between both ends of the samples were measured in the respective periods.

The 20% tensile strain means a tensile strain where an extension percentage r of the sample becomes 20%. L1 indicates a length of the sample before extension, L2 indicates the length of the sample after the extension, and $\Delta L$ (= L2 - L1) indicates an increase amount of L2 with respect to L1. Then, the extension percentage r is expressed by the following formula (1).

$$r = (\Delta L/L1) \times 100 \ldots (1)$$

Since the length L1 of the respective samples a1, b1, c1, d1, e1, f1, and g1 before the extension is 15 cm, the length of the respective samples a1, b1, c1, d1, e1, f1, and g1 after the extension applying the 20% tensile strain becomes 18 cm.

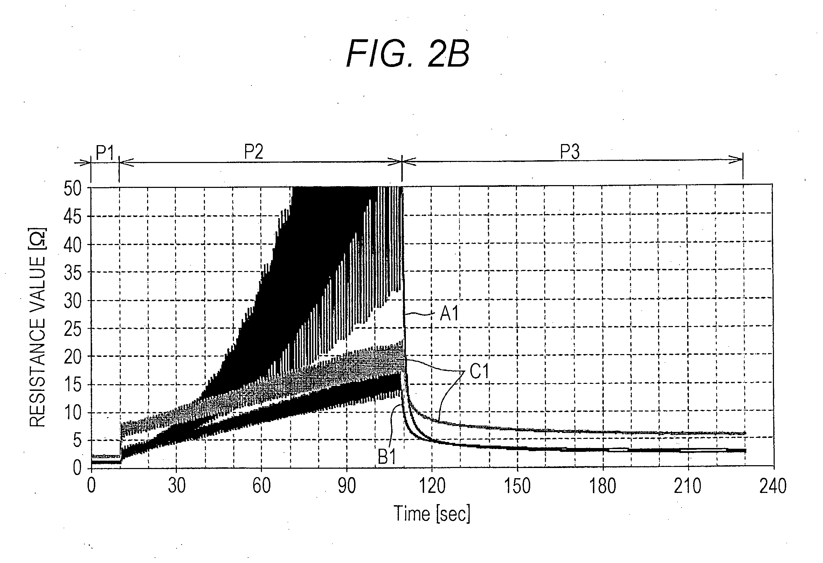

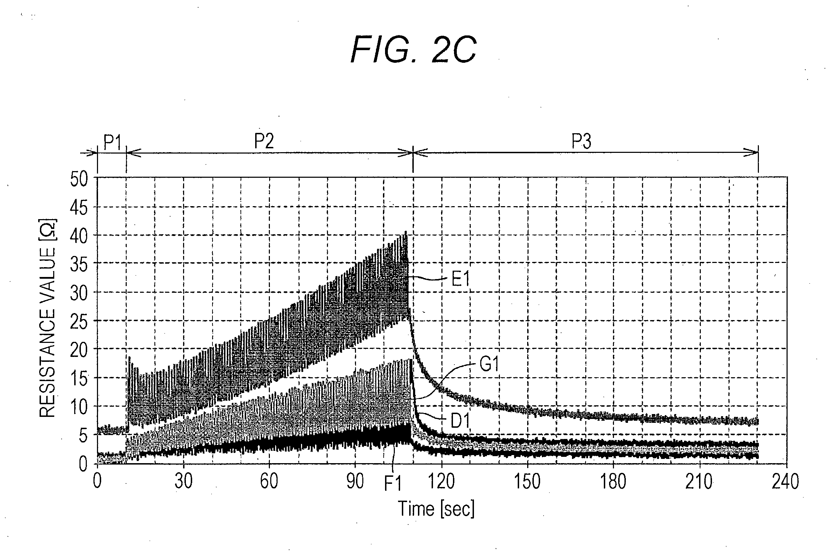

Fig. 2A, Fig. 2B, and Fig. 2C are graphs illustrating results of the first evaluation experiment. Broken lines A1, B1, and C1 in Fig. 2A indicate changes in resistance value of the samples a1, b1, and c1. Fig. 2B illustrates an enlarged part of the broken lines A1, B1, and C1 in Fig. 2A in a range of the resistance value of 0 $\Omega$ to 50 $\Omega$. Broken lines D1, E1, F1, and G1 in Fig. 2C indicate changes in resistance value of the samples d1, e1, f1, and g1. Scale widths for the horizontal axis and the vertical axis in Fig. 2C are identical to those in Fig. 2B, respectively. P1, P2, and P3 in the graphs in Fig. 2A, Fig. 2B, and Fig. 2C indicate the first period P1, the second period P2, and the third period P3, respectively.

As apparent from the graphs in Fig. 2A, Fig. 2B, and Fig. 2C, in the second period P2, the resistance values of the respective samples a1, b1, c1, d1, e1, f1, and g1 increased as the number of applications of tensile strain increased. Stopping the periodic application of the tensile strain to the respective samples a1, b1, c1, d1, e1, f1, and g1 rapidly reduces the resistance values of the respective samples a1, b1, c1, d1, e1, f1, and g1. Afterwards, these resistance values gradually decreased (see the third period P3).

As apparent from the graphs in Fig. 2A, Fig. 2B, and Fig. 2C, in the second period P2, increase rates of the resistance value of the respective samples a1, b1, c1, d1, e1, f1, and g1 differ from each other. For example, as illustrated in Fig. 2A and Fig. 2B, the resistance value of the sample a1 at a start of the second period P2 was 0.8 $\Omega$, and a maximum value of the resistance value in the second period P2 was 178.6 $\Omega$. The resistance value of the sample b1 at the start of the second period P2 was 1.2 $\Omega$, and a maximum value of the resistance value immediately before the end of the second period P2 was 17.8 $\Omega$. The resistance value of the sample c1 at the start of the second period P2 was 2.0 $\Omega$, and a maximum value of the resistance value in the second period P2 was 22.9 $\Omega$.

That is, the resistance value of the sample a1 becomes 30 $\Omega$ or more in the case where the 20% tensile strain was repeatedly applied 100 times at the frequency of 1.0 Hz on the respective samples a1, b1, and c1. However, the sample b1 and the sample c1 exhibited the resistance values of 30 $\Omega$ or less. Accordingly, it can be predicted that, with the filling factor of the dendrite-shaped conductive filler of 70 mass% or more and 95 mass% or less in the conductive composition, the increase in resistance value in the case where the 20% tensile strain is repeatedly applied 100 times at the frequency of 1.0 Hz may reduce. Also, it can be predicted that, with the filling factor of the dendrite-shaped conductive filler of 75 mass% or more and 90 mass% or less in the conductive composition, the increase in resistance value in the case where the 20% tensile strain is repeatedly applied 100 times at the frequency of 1.0 Hz may further reduce

As illustrated in Fig. 2C, the resistance value of the sample d1 at the start of the second period P2 was 1.4 $\Omega$, and a maximum value of the resistance value in the second period P2 was 18.0 $\Omega$. The resistance value of the sample e1 at the start of the second period P2 was 5.8 $\Omega$, and a maximum value of the resistance value in the second period P2 was 40.6 $\Omega$. The resistance value of the sample f1 at the start of the second period P2 was 0.8 $\Omega$, and a maximum value of the resistance value in the second period P2 was 8.4 $\Omega$. The resistance value of the sample g1 at the start of the second period P2 was 1.8 $\Omega$, and a maximum value of the resistance value in the second period P2 was 18.2 $\Omega$. The following has been found from these facts. As long as the thicknesses of the samples are identical, the samples f1 and g1, which used the silver powder, exhibit small values in both the increase rate of the resistance value in the second period P2 and the maximum value of the resistance value in the second period P2 compared with the samples d1 and e1, which used the silver-coated copper powder. In other words, as long as the lengths and the widths of the samples are identical, to set the maximum value of the resistance value in the second period P2 to be a predetermined value or less, the thicknesses of conductive films of the samples f1 and g1, which used the silver powder, can be thinner compared with those of the samples d1 and e1, which used the silver-coated copper powder.

[Second Evaluation Experiment]

The second evaluation experiment was conducted on the samples a2, b2, and c2. In the second evaluation experiment, firstly, the samples are maintained for 10 seconds in a natural state. This period may be referred to as first period P1. After this, 40% tensile strain is repeatedly applied 100 times at a frequency of 1.0 Hz on the samples. This period may be referred to as second period P2. The duration of second period P2 is 100 seconds. Finally, the sample is returned to the normal state and maintained in the natural state for 120 seconds. This period may be referred to as third period P3. Resistances between both ends of the samples were measured in these respective periods.

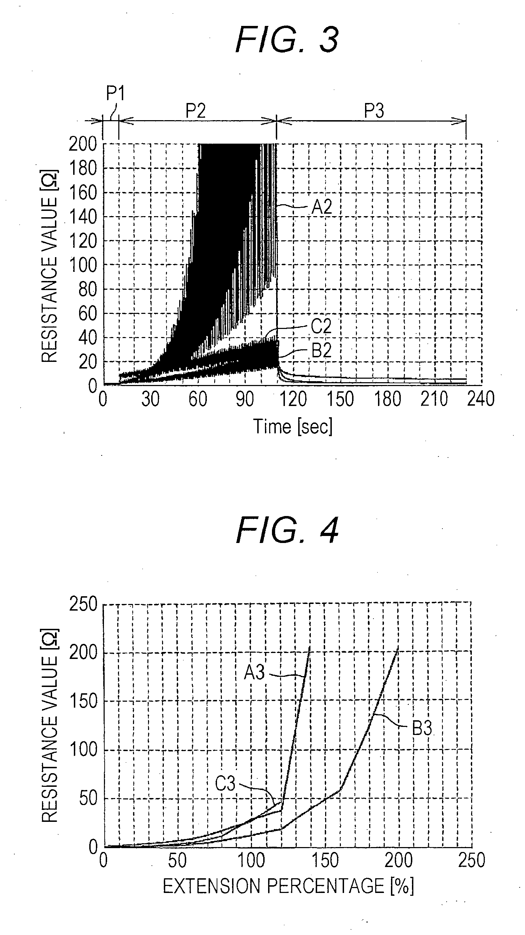

Fig. 3 is a graph illustrating results of the second evaluation experiment. Broken lines A2, B2, and C2 in the graph of Fig. 3 indicate changes in resistance value of the samples a2, b2, and c2. P1, P2, and P3 in the graph in Fig. 3 indicate the first period P1, the second period P2, and the third period P3, respectively. As apparent from the graph in Fig. 3, in the second period P2, the resistance values of the respective samples a2, b2, and c2 increased as the number of applications of tensile strain increased. Stopping the periodic application of the tensile strain to the samples rapidly reduces the resistance values of the respective samples a2, b2, and c2. Afterwards, these resistance values gradually decreased (see the third period P3).

As apparent from the graph in Fig. 3, in the second period P2, increase rates of the resistance value of the respective samples a2, b2, and c2 differ from each other. Specifically, the resistance value of the sample a2 at the start of the second period P2 was 0.3 $\Omega$, and a maximum value of the resistance value in the second period P2 was 200 $\Omega$ or more (limit of measurement). The resistance value of the sample b2 at the start of the second period P2 was 0.3 $\Omega$, and a maximum value of the resistance value in the second period P2 was 31.4 $\Omega$. The resistance value of the sample c2 at the start of the second period P2 was 1.4 $\Omega$, and a maximum value of the resistance value in the second period P2 was 41.9 $\Omega$.

That is, the maximum value of the resistance value of the sample a2 becomes 50 $\Omega$ or more in the case where the 40% tensile strain was repeatedly applied 100 times at the frequency of 1.0 Hz on the respective samples a2, b2, and c2. However, the sample b2 and the sample c2 exhibit the maximum value of the resistance values of 50 $\Omega$ or less. Accordingly, it can be predicted that, with the filling factor of the dendrite-shaped conductive filler of 70 weight% or more and 95 weight% or less in the conductive composition, the increase in resistance value in the case where the 40% tensile strain is repeatedly applied 100 times at the frequency of 1.0 Hz may reduce. Also, it can be predicted that, with the filling factor of the dendrite-shaped conductive filler of 75 mass% or more and 90 mass% or less in the conductive composition, the increase in resistance value in the case where the 40% tensile strain is repeatedly applied 100 times at the frequency of 1.0 Hz may further reduce.

[Third Evaluation Experiment]

The third evaluation experiment was conducted on the samples a3, b3, and c3. The third evaluation experiment is conducted as follows. First, resistance values between both ends of the samples are measured before the extension. After this, the samples are extended up to a plurality of predetermined lengths, which are determined in advance, and resistance values between both ends of the samples after the extension are measured. Such resistance values were measured at various extension percentages, at every 20% within a range from 0% to 200%.

Table 2 shows the results of the third evaluation experiment on the sample a3. Table 3 shows the results of the third evaluation experiment on the sample b3. Table 4 shows the results of the third evaluation experiment on the sample c3. Fig. 4 is a graph illustrating the results of the third evaluation experiment. Broken lines A3, B3, and C3 in the graph of Fig. 4 indicate resistance values of the respective samples a3, b3, and c3 with respect to the extension percentage.

[Table 2]

| Sample a3 | | | | |
|---|---|---|---|---|
| Before extension | After extension | After extension | Before extension | After extension |
| Length L1 (cm) | Length L2 (cm) | Extension percentage r (%) | Resistance value R1 ($\Omega$) | Resistance value R2 ($\Omega$) |
| 5 | 5 | 0 | 0.257 | 0.257 |
| 5 | 6 | 20 | 0.238 | 0.682 |
| 5 | 7 | 40 | 0.228 | 2.424 |
| 5 | 8 | 60 | 0.254 | 5.787 |
| 5 | 9 | 80 | 0.265 | 11.523 |
| 5 | 10 | 100 | 0.270 | 29.093 |
| 5 | 11 | 120 | 0.272 | 38.240 |
| 5 | 12 | 140 | 0.267 | 204.820 |
| 5 | 13 | 160 | 0.263 | Non-conductive |
| 5 | 14 | 180 | - | - |

(continued)

| Sample a3 | | | | |
|---|---|---|---|---|
| Before extension | After extension | After extension | Before extension | After extension |
| Length L1 (cm) | Length L2 (cm) | Extension percentage r (%) | Resistance value R1 (Ω) | Resistance value R2 (Ω) |
| 5 | 15 | 200 | - | - |

[Table 3]

| Sample b3 | | | | |
|---|---|---|---|---|
| Before extension | After extension | After extension | Before extension | After extension |
| Length L1 (cm) | Length L2 (cm) | Extension percentage r (%) | Resistance value R1 (Ω) | Resistance value R2 (Ω) |
| 5 | 5 | 0 | 0.173 | 0.173 |
| 5 | 6 | 20 | 0.182 | 0.733 |
| 5 | 7 | 40 | 0.176 | 1.892 |
| 5 | 8 | 60 | 0.169 | 3.472 |
| 5 | 9 | 80 | 0.176 | 6.993 |
| 5 | 10 | 100 | 0.171 | 12.947 |
| 5 | 11 | 120 | 0.171 | 18.853 |
| 5 | 12 | 140 | 0.173 | 39.920 |
| 5 | 13 | 160 | 0.175 | 57.840 |
| 5 | 14 | 180 | 0.172 | 123.910 |
| 5 | 15 | 200 | 0.162 | 203.120 |

[Table 4]

| Sample c3 | | | | |
|---|---|---|---|---|
| Before extension | After extension | After extension | Before extension | After extension |
| Length L1 (cm) | Length L2 (cm) | Extension percentage r (%) | Resistance value R1 (Ω) | Resistance value R2 (Ω) |
| 5 | 5 | 0 | 0.790 | 0.790 |
| 5 | 6 | 20 | 0.765 | 2.557 |
| 5 | 7 | 40 | 0.869 | 5.299 |
| 5 | 8 | 60 | 0.773 | 9.226 |
| 5 | 9 | 80 | 0.909 | 17.094 |
| 5 | 10 | 100 | 0.816 | 27.195 |
| 5 | 11 | 120 | 0.669 | 46.580 |
| 5 | 12 | 140 | 0.726 | Cut |
| 5 | 13 | 160 | - | - |
| 5 | 14 | 180 | - | - |
| 5 | 15 | 200 | - | - |

The length L1 in Table 2 to Table 4 indicates the length of the samples before the extension. The length L1 of the respective samples a3, b3, and c3 before the extension is 5 cm. The length L2 indicates the length of the samples after the extension. The extension percentage r is a value calculated based on the formula (1). The resistance value R1 indicates the resistance value of the samples before the extension. The resistance value R2 indicates the resistance value of the samples after the extension.

As illustrated in Fig. 4, all samples a3, b3, and c3 have the resistance value R2 of 50 Ω or less during the extension at the extension percentage of 120%. It has been found from this fact that Examples 1 to 3 are the extendable conductive compositions that can restrain the increase in resistivity during extension. As illustrated in Fig. 4, the sample c3 was cut during the extension at the extension percentage of 140%, resulting in a non-conductive state (also see Table 4). Although the sample a3 was not cut during the extension at the extension percentage of 160%, the sample a3 became to the non-conductive state (also see Table 2). In contrast to this, the sample b3 did not become the non-conductive state even during the extension at the extension percentage of 200%. The resistance value R2 of the sample b3 was 203 Ω during the extension at the extension percentage of 200% (also see Table 3).

It can be predicted from this fact that the conductive composition with the filling factor of conductive filler of 70 mass% or more and 95 mass% or less exhibits high extendibility and can restrain the increase in resistance value during the extension. It can be predicted from this fact that the conductive composition with the filling factor of conductive filler of 75 mass% or more and 90 mass% or less exhibits higher extendibility and can further restrain the increase in resistance value during the extension. It can be predicted from this fact that the conductive composition with the filling factor of conductive filler of 75 mass% or more and 85 mass% or less exhibits significantly high extendibility and can restrain the increase in resistance value during the extension more effectively.

The above-described Examples 1 to 7 use PANDEX 372E manufactured by DIC CORPORATION or NE-310 manufactured by DAINICHISEIKA COLOR & CHEMICALS MFG. CO., LTD. as the elastomer. Note that, as the elastomer, NE-8880, MAU-9022, NE-302HV, CU-8448, or the like manufactured by DAINICHISEIKA COLOR & CHEMICALS MFG. CO., LTD. may be used.

[Conductive Sheet]

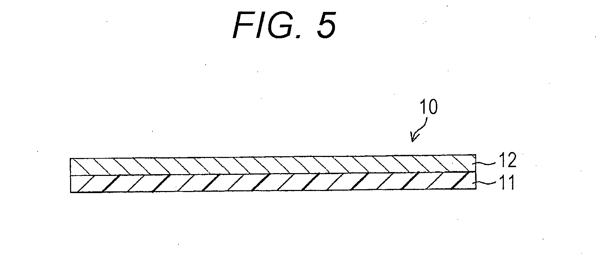

Fig. 5 is a cross-sectional view illustrating a structure of the conductive sheet according to first embodiment of the present invention.

This conductive sheet 10 includes a peeling film 11 and a conductive film 12 made of the above-described conductive composition. The conductive film 12 is formed on one surface of the peeling film 11.

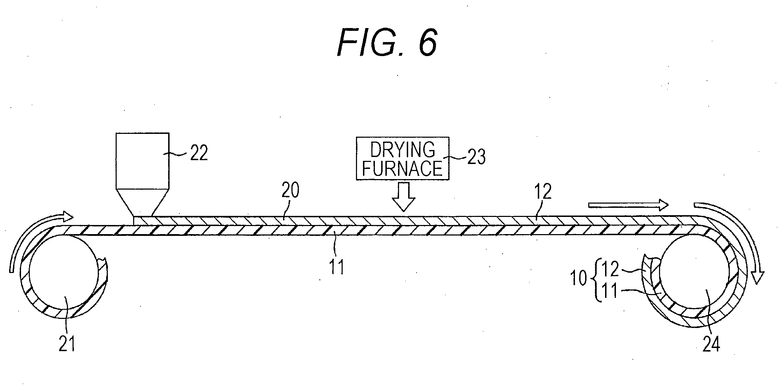

Fig. 6 is an explanatory view to describe an example of a manufacturing process for the conductive sheet 10 in Fig. 5.

An apparatus to manufacture the conductive sheet 10 includes, for example, an unwinding roll 21, a slit die coater, a coater head 22 (coating device) such as a comma coater, a drying furnace 23 (drying device), and a winding roll 24. Around the unwinding roll 21, the elongated peeling film 11 is wound. The coater head 22 houses a conductive solution 20 containing an elastomer, a dendrite-shaped conductive filler, and an organic solvent. The conductive solution 20 is manufactured by the method identical to the method described for manufacturing the samples a1 to c3.

The peeling film 11 is fed from the unwinding roll 21 to the winding roll 24. The coater head 22 applies the conductive solution 20 over one surface (an upper surface in the example of Fig. 6) of the peeling film 11 fed from the unwinding roll 21. The peeling film 11 over which the conductive solution 20 has been applied is conveyed to a drying-heating part that includes the drying furnace 23.

In the drying-heating part, the conductive solution 20 on the peeling film 11 is heat dried by the drying furnace 23. The drying furnace 23 may be, for example, a hot wind blower that blows hot wind from upper space of the surface (the surface where the conductive solution 20 has been applied) of the peeling film 11 to the peeling film 11. In this respect, the temperature of the hot wind may be increased in phases. For example, the heat drying by hot wind may be performed at 60°C for two minutes, and then at 100°C for two minutes, and finally at 120°C for two minutes. By heat drying on the conductive solution 20 the conductive film 12 made of conductive composition may be formed on the surface of the peeling film 11. After that, the peeling film 11 where the conductive film 12 has been formed is rolled up by the winding roll 24. This ensures obtaining the conductive sheet 10 that includes the peeling film 11 and the conductive film 12 formed on the peeling film 11.

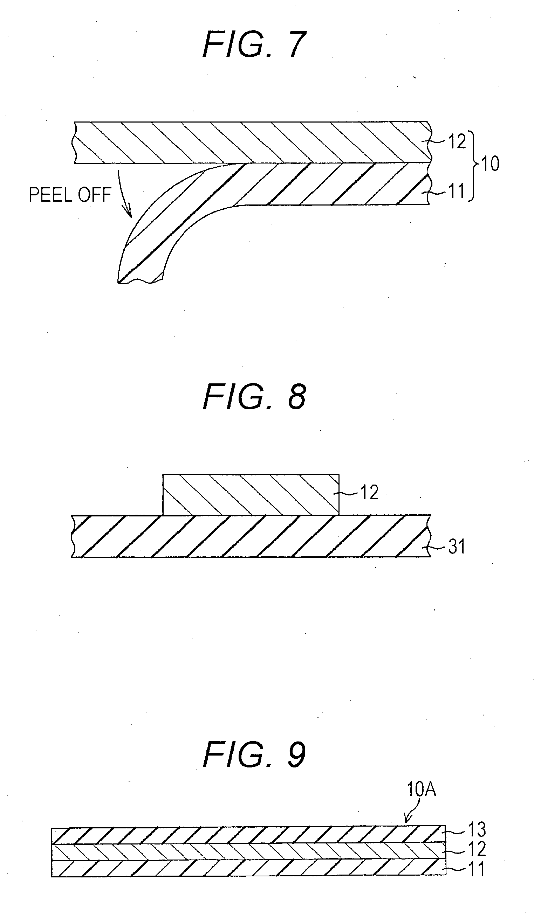

Fig. 7 is a schematic cross-sectional view to describe the method of using the conductive sheet 10. Fig. 8 is a schematic cross-sectional view to describe an example of use of the conductive sheet 10.

The following describes the case of the use of the conductive sheet 10 as a circuit for extendable device. The conductive sheet 10 manufactured as above is cut into desired shape and size. Next, as illustrated in Fig. 7, the peeling film 11 is peeled off from the conductive film 12. As illustrated in Fig. 8, the conductive film 12 is pasted onto a surface of an insulating film 31 formed on the extendable device. The conductive film 12 may be pasted to the insulating film 31 by, for example, heat press transfer.

The conductive film 12 can be pasted onto clothing and the like so that it may be used as biomedical electrode which measures an electrocardiogram and the like.

Fig. 9 is a cross-sectional view illustrating a structure of the conductive sheet according to second embodiment of the present invention.

A conductive sheet 10A includes the peeling film 11, the conductive film 12 made of the above-described conductive composition, and an insulating protective film 13. The conductive film 12 is formed on one surface of the peeling film 11. The insulating protective film 13 is formed on a surface of the conductive film 12, the surface being on the opposite side of the peeling film 11.

With reference to Fig. 6, the conductive sheet 10A can be manufactured by, for example, adding a process of applying a material of the insulating protective film 13 over the surface (the top surface) of the conductive film 12 and drying the material after the above-described heat drying process of the conductive solution 20.

The conductive sheet 10A may be manufactured as follows. The conductive solution 20 applied over one surface of the insulating protective film 13 is dried to form the conductive film 12 on the surface of the insulating protective film 13. Then, the peeling film 11 is pasted onto a surface of the conductive film 12, the surface being on the opposite side of the insulating protective film 13.

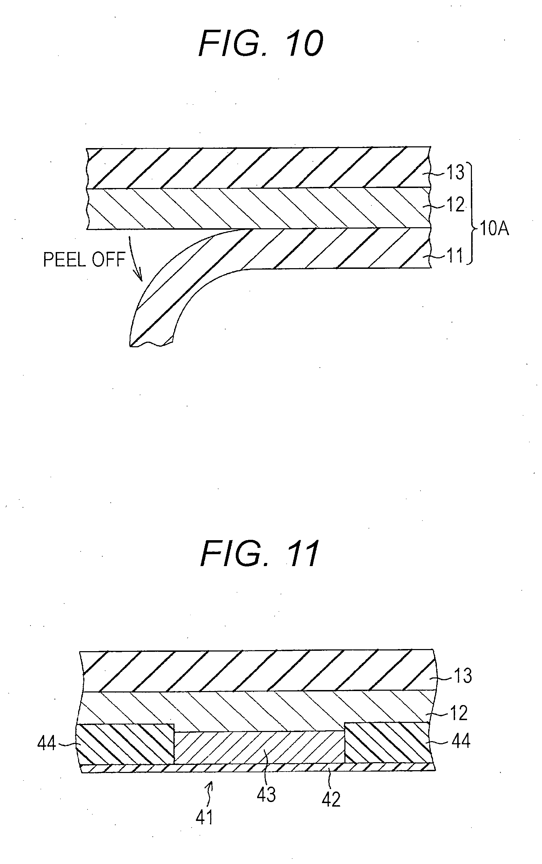

Fig. 10 is a schematic cross-sectional view to describe a method of using the conductive sheet 10A. Fig. 11 is a schematic cross-sectional view to describe an example of use of the conductive sheet 10A.

The following describes the case of using the conductive sheet 10A as an extendable electromagnetic wave shield film. The conductive sheet 10A manufactured as described above is cut into desired shape and size. Next, as illustrated in Fig. 10, the peeling film 11 is peeled off from the conductive film 12. As illustrated in Fig. 11, the conductive film 12 where the insulating protective film 13 is formed is pasted onto the surface of a printed circuit board 41. The printed circuit board 41 is, for example, a single side flexible printed circuit (FPC) that includes a base film 42, a ground circuit 43 which is formed on the base film 42, cover lay films 44 which are formed so as to cover regions other than the ground circuit 43.

The conductive film 12 where the insulating protective film 13 is formed is pasted so as to cover the surfaces of ground circuit 43 and cover lay films 44. Specifically, the surface of the conductive film 12 where the insulating protective film 13 is not formed is pasted onto the surfaces of the ground circuit 43 and the cover lay films 44 in the state of facing to the surfaces of the ground circuit 43 and the cover lay films 44. The conductive film 12 is grounded via the ground circuit 43. Thus, the conductive film 12 where the insulating protective film 13 is formed on the surface functions as the extendable electromagnetic wave shield film.

Although the embodiments of the present invention are described above, the present invention can also be embodied by yet other forms.

For example, with the above-described electromagnetic wave shield film, a conductive adhesive layer may be disposed between the conductive film 12 and the ground circuit 43, and the conductive film 12 may be electrically connected with the ground circuit 43 via the conductive adhesive layer.

LIST OF REFERENCE NUMERALS

| | |
|---|---|
| a1, b1, c1, d1, e1, f1, g1: | Sample |
| a2, b2, c2: | Sample |
| a3, b3, c3: | Sample |
| 10: | Conductive sheet |
| 11: | Peeling film |
| 12: | Conductive film |
| 13: | Insulating protective film |

**Claims**

1. A conductive sheet comprising:
   a peeling film and a conductive film formed on one surface of the peeling film, the conductive film being made of a conductive composition comprising:

   a polyurethane-based elastomer; and
   a dendrite-shaped conductive filler filled in the polyurethane-based elastomer, wherein
   a filling factor of the conductive filler in the polyurethane-based elastomer is 70 weight% or more and 95 weight% or less and the polyurethane-based elastomer is formed of a hard segment and a soft segment, wherein the soft segment includes a carbonate, ester, or ether.

2. The conductive sheet according to claim 1, wherein
a filling factor of the conductive filler in the elastomer is 70 weight% or more and 90 weight% or less.

3. The conductive sheet according to claim 1, wherein
a filling factor of the conductive filler in the elastomer is 70 weight% or more and 85 weight% or less.

4. The conductive sheet according to any one of claims 1 to 3, wherein
the conductive filler is a dendrite-shaped silver powder.

5. The conductive sheet according to any one of claims 1 to 3, wherein
the conductive filler is a silver-coated copper powder including a dendrite-shaped copper powder coated with silver.

6. The conductive sheet according to any one of claims 1 to 3, wherein
the conductive filler is a dendrite-shaped copper powder.

7. The conductive sheet according to any one of claims 1 to 6, further comprising:
an insulating protective film formed on a surface of the conductive film, the surface being on the opposite side of the peeling film.


**Patentansprüche**

1. Leitfähige Folie, umfassend:
einen Abziehfilm und einen leitfähigen Film, der auf einer Oberfläche des Abziehfilms ausgebildet ist, wobei der leitfähige Film aus einer leitfähigen Zusammensetzung hergestellt ist, die umfasst:

ein Elastomer auf Polyurethanbasis; und
einen dendritenförmigen leitfähigen Füllstoff, der in das Elastomer auf Polyurethanbasis gefüllt ist, wobei ein Füllfaktor des leitfähigen Füllstoffs in dem Elastomer auf Polyurethanbasis 70 Gew.-% oder mehr und 95 Gew.-% oder weniger beträgt und das Elastomer auf Polyurethanbasis aus einem harten Segment und einem weichen Segment gebildet ist, wobei das weiche Segment ein Carbonat, einen Ester oder einen Ether enthält.

2. Leitfähige Folie nach Anspruch 1, wobei
ein Füllfaktor des leitfähigen Füllstoffs in dem Elastomer 70 Gew.-% oder mehr und 90 Gew.-% oder weniger beträgt.

3. Leitfähige Folie nach Anspruch 1, wobei
ein Füllfaktor des leitfähigen Füllstoffs in dem Elastomer 70 Gew.-% oder mehr und 85 Gew.-% oder weniger beträgt.

4. Leitfähige Folie nach einem der Ansprüche 1 bis 3, wobei
der leitfähige Füllstoff ein dendritenförmiges Silberpulver ist.

5. Leitfähige Folie nach einem der Ansprüche 1 bis 3, wobei
der leitfähige Füllstoff ein silberbeschichtetes Kupferpulver ist, das ein mit Silber beschichtetes dendritenförmiges Kupferpulver enthält.

6. Leitfähige Folie nach einem der Ansprüche 1 bis 3, wobei
der leitfähige Füllstoff ein dendritenförmiges Kupferpulver ist.

7. Leitfähige Folie nach einem der Ansprüche 1 bis 6, weiter umfassend:
einen isolierenden Schutzfilm, der auf einer Oberfläche des leitfähigen Films ausgebildet ist, wobei sich die Oberfläche auf der gegenüberliegenden Seite des Abziehfilms befindet.


**Revendications**

1. Feuille conductrice comprenant :
un film à peler et un film conducteur formé sur une surface du film à peler, le film conducteur étant réalisé en une composition conductrice comprenant :

un élastomère à base de polyuréthane ; et
une charge conductrice en forme de dendrite versée dans l'élastomère à base de polyuréthane, dans laquelle un facteur de remplissage de la charge conductrice dans l'élastomère à base de polyuréthane est de 70 % en poids ou plus et 95 % en poids ou moins, et l'élastomère à base de polyuréthane est formé d'un segment dur et d'un segment mou, dans laquelle le segment mou inclut un carbonate, ester ou éther.

2.   Feuille conductrice selon la revendication 1, dans laquelle un facteur de remplissage de la charge conductrice dans l'élastomère est de 70 % en poids ou plus et 90 % en poids ou moins.

3.   Feuille conductrice selon la revendication 1, dans laquelle un facteur de remplissage de la charge conductrice dans l'élastomère est de 70 % en poids ou plus et 85 % en poids ou moins.

4.   Feuille conductrice selon l'une quelconque des revendications 1 à 3, dans laquelle
la charge conductrice est une poudre d'argent en forme de dendrite.

5.   Feuille conductrice selon l'une quelconque des revendications 1 à 3, dans laquelle
la charge conductrice est une poudre de cuivre enrobée d'argent incluant une poudre de cuivre en forme de dendrite enrobée d'argent.

6.   Feuille conductrice selon l'une quelconque des revendications 1 à 3, dans laquelle
la charge conductrice est une poudre de cuivre en forme de dendrite.

7.   Feuille conductrice selon l'une quelconque des revendications 1 à 6, comprenant en outre :
un film protecteur isolant formé sur une surface du film conducteur, la surface étant sur le côté opposé du film à peler.

# FIG. 1

a1 TO c3, d1, e1, f1, g1

T

W

L

# FIG. 2A

# FIG. 2B

# FIG. 2C

EP 3 196 257 B1

# FIG. 3

# FIG. 4

## FIG. 5

EP 3 196 257 B1

# FIG. 6

DRYING
FURNACE — 23

22

20

12

11

10 {
12
11

21

24

## FIG. 7

PEEL OFF

12
11
}10

## FIG. 8

12

31

## FIG. 9

10A

13
12
11

# FIG. 10

PEEL OFF

13
12
11
10A

# FIG. 11

13
12
44
44
41
43
42

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010153364 A
- JP 2012054192 A
- EP 2457944 A1
- WO 2012164925 A1